# EUROPEAN PATENT SPECIFICATION

(11) **EP 2 224 631 B1**
(45) Date of publication and mention of the grant of the patent: **26.08.2015**
(21) Application number: 09153830.6
(22) Date of filing: 26.02.2009
(51) Int. Cl.: H04L 1/00, H04L 1/16, H04L 1/18

(54) **Method, apparatus and system for improving packet throughput based on classification of packet loss in data transmissions**
Verfahren, Vorrichtung und System zur Verbesserung des Paketdurchsatzes basierend auf der Klassifizierung des Paketverlustes bei Datenübertragungen
Procédé, appareil et système pour améliorer le rendement de paquets basé sur une classification de perte de paquets dans des transmissions de donnés

(43) Date of publication of application: 01.09.2010
(73) Proprietor: BlackBerry Limited, Waterloo, ON N2K 0A7 (CA)
(72) Inventor: Sau, Jonathan, Waterloo Ontario N2L 5Z5 (CA); Ling, Xinhua, Waterloo Ontario N2L 5Z5 (CA); Preiss, Bruno R., Waterloo Ontario N2L 5Z5 (CA)
(74) Representative: MERH-IP Matias Erny Reichl Hoffmann

(56) References cited:
- EP-A2- 1 211 864
- WO-A1-2005/011187
- US-A- 6 097 697
- US-A1- 2007 070 892
- CHRUNGOO A ET AL: "TCP K-SACK: A SIMPLE PROTOCOL TO IMPROVE PERFORMANCE OVER LOSSY LINKS" GLOBECOM'01. 2001 IEEE GLOBAL TELECOMMUNICATIONS CONFERENCE. SAN ANTONIO, TX, NOV. 25 - 29, 2001; [IEEE GLOBAL TELECOMMUNICATIONS CONFERENCE], NEW YORK, NY : IEEE, US, 25 November 2001 (2001-11-25), pages 1713-1717, XP001054870 ISBN: 978-0-7803-7206-1
- VARSHNEY U: "Selective slow start: a simple algorithm for improving TCP performance in wireless ATM environment" MILCOM 97 PROCEEDINGS MONTEREY, CA, USA 2-5 NOV. 1997, NEW YORK, NY, USA,IEEE, US, vol. 1, 2 November 1997 (1997-11-02), pages 465-469, XP010260877 ISBN: 978-0-7803-4249-1

## Description

### FIELD

The present specification relates generally to computing and more specifically relates to a method, apparatus and system for improving packet throughput based on classification of packet loss in data transmissions.

### BACKGROUND

Many network transport protocols (like the Transmission Control Protocol (TCP)) feature adaptive congestion control mechanisms, in which the data transmission rate is dynamically adjusted to the network condition in order to utilize the available bandwidth optimally. For example, when available bandwidth is detected, the transport protocol increases the rate of data transmission. When network congestion is detected, the transport protocol reduces the rate of data transmission. Some network transport protocols use packet loss as an indication that network congestion has occurred. While this method is well suited to networks in which the predominant cause of packet loss is network congestion, it does not work well in networks in which a non-negligible amount of packet loss is caused by reasons other than network congestion. For example, in a wireless network, a significant source of packet loss is due to transmission errors caused by fluctuating signal strength, thermal noise and interference. Furthermore, despite the application of error control technique like forward error correction (FEC) and/or automatic retransmission requests (ARQ), there are often residual transmission errors that are not detected by the error control technique. For transport protocols using packet loss as an indication of network congestion, this will result in the sender unnecessarily reducing the data transmission rate, resulting in poor link utilization.

Various solutions have been proposed. For example, "De-randomizing" Congestion Losses To Improve TCP Performance over Wired-Wireless Networks" by Saad Biaz and Nitin H. Vaidya dated September 27, 2004, ACM/IEEE Transactions on Networking June 2005, proposes one solution which relies on having a bottleneck network node that supports drop precedence.

As another example, "An Adaptive End-to-End Loss Differentiation Scheme for TCP over Wired/Wireless Networks" by Chang-hyeon Lim, and Juwook Jang IJCSNS International Journal of Computer Science and Network Security, VOL.7 No.3, March 2007 at page 72, proposes another solution, which uses the variation of round trip time (RTT) as the detection signature.

WO 2005 011 187, EP 1 211 864, and US 609 7697 disclose other methods known in the art.

The inventors believe that other solutions for improving packet throughput can be provided.

### SUMMARY

Embodiments of the invention are disclosed in the appended claims.

### BRIEF DESCRIPTION OF THE DRAWINGS

Figure 1 shows a schematic representation of a system for improving packet throughput based on classification of packet loss in data transmissions.

Figure 2 shows a schematic representation of the portable computing device of Figure 1.

Figure 3 shows a flow-chart depicting a method for improving packet throughput based on classification of packet loss in data transmissions.

Figure 4 shows the system of claim 1 during exemplary performance of the method in Figure 3.

Figure 5 shows the system of claim 1 during a second exemplary performance of the method in Figure 3.

Figure 6 shows a representation of the structure of selective acknowledgements from Figure 5.

Figure 7 shows the system of claim 1 during a third exemplary performance of the method in Figure 3.

Figure 8 shows a representation of the structure of selective acknowledgements from Figure 7.

### DESCRIPTION OF PREFERRED EMBODIMENTS

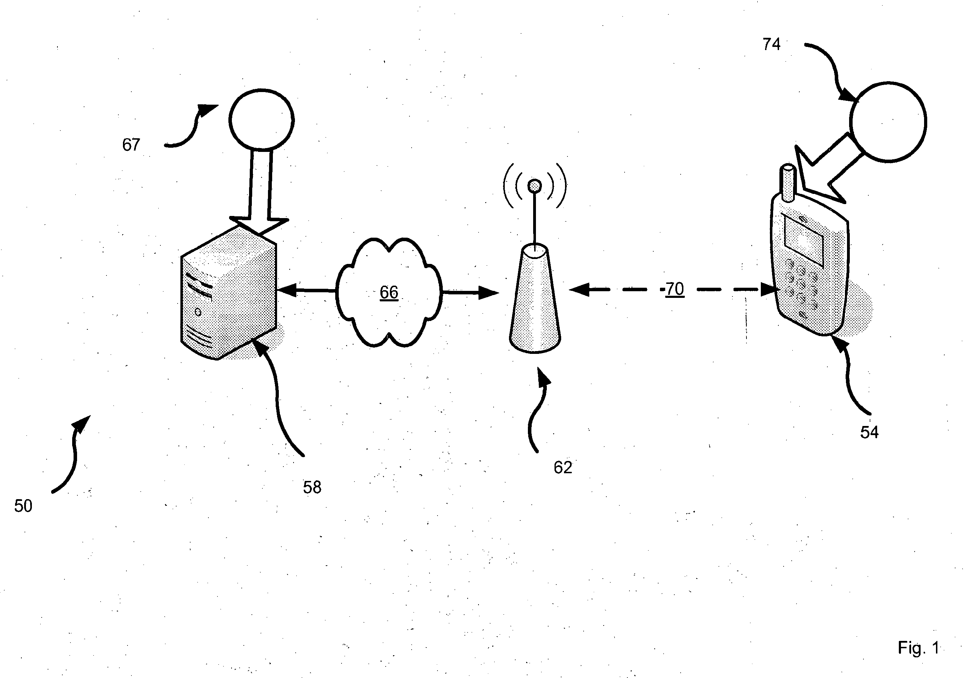

Referring now to Figure 1, an exemplary system for improving packet throughput based on classification of packet loss in data transmissions is indicated generally at 50. In a present embodiment system 50 comprises at least one portable computing device 54, and a server 58. A wireless base station 62 interconnects computing device 54 and mediation server 58. As will be discussed further below, in more general terms server 58 can be considered a sending computer and computing device 54 can be considered a receiving computer. In certain variations, these roles can be reversed. In other variations the sending computer can be either a computing device or a server, while the receiving computer can also be either a computing device or a server.

A backhaul link 66 connects base station 62 with server 58. Backhaul link 66 can be based on a broader network infrastructure such as the Internet. In a present example it will be assumed that backhaul link 66 is a wired link.

A wireless link 70 connects base station 62 with computing device 54. Link 70 can be based on a variety of protocols, including, without limitation, Global System for Mobile communications (GSM), General Packet Radio Service (GPRS), Enhanced Data Rates for GSM Evolution (EDGE), 3G, 4G, Universal Mobile Telecommunications System (UMTS), Institute of Electrical and Electronics Engineers (IEEE) Standard 802.11, IEEE 802.15, Bluetooth.

Computing device 54 is configured to maintain and execute a first packet manager application 74, and server 58 is configured to maintain a second packet manager 67 which will be discussed further below.

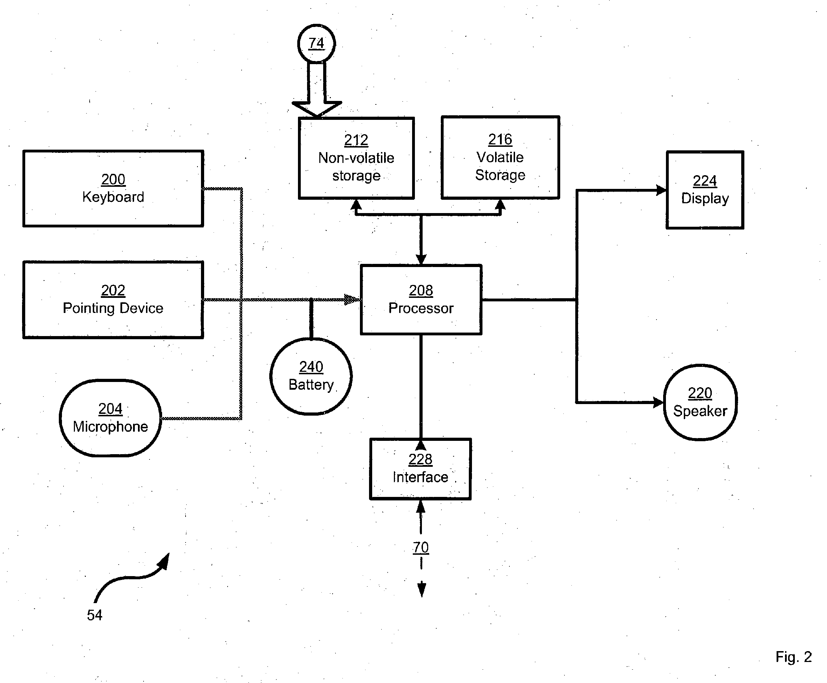

Referring briefly now to Figure 2, computing device 54 can be any type of electronic device that can be used in a self-contained manner and to interact with server 58. Interaction includes displaying information on a display of computing device 54 based on content received over link 70, as well as to receive input at computing device 54 that can in turn be sent back over link 70. It should be emphasized that the structure in Figure 2 is purely exemplary, and contemplates a device that be used for both wireless voice (e.g. telephony) and wireless data (e.g. email, web browsing, text) communications. In a present embodiment, computing device 54 is a mobile electronic device with the combined functionality of a personal digital assistant, a cell phone, and an email paging device. Many well known cellular telephone models, or variants thereof, are suitable for the present embodiment.

Device 54 thus includes a plurality of input devices which in a present embodiment include a keyboard 200, a pointing device 202, and a microphone 204. Pointing device 202 can be implemented as a track wheel, trackball, touchscreen or the like. Input from keyboard 200, pointing device 202 and microphone 204 is received at a processor 208. Processor 208 is configured to communicate with a non-volatile storage unit 212 (e.g. Erasable Electronic Programmable Read Only Memory ("EEPROM"), Flash Memory) and a volatile storage unit 216 (e.g. random access memory ("RAM")). Programming instructions that implement the functional teachings of device 54 as described herein are typically maintained, persistently, in non-volatile storage unit 212 and used by processor 208 which makes appropriate utilization of volatile storage 216 during the execution of such programming instructions. Those skilled in the art will now recognize that non-volatile storage unit 212 and volatile storage 216 are non-limiting examples of computer readable media that can store programming instructions executable on processor 208.

Processor 208 in turn is also configured to control a speaker 220 and a display 224. Processor 208 also connects to a network interface 228, which are implemented in a present embodiment as radios configured to communicate over link 70. In general, it will be understood that interface 228 is configured to correspond with the network architecture that is used to implement link 70. (In other embodiments a plurality of links 70 with different protocols can be employed and thus a plurality of interfaces can be provided to support each link.) It should be understood that in general a wide variety of configurations for device 54 are contemplated.

In a present embodiment, device 54 is also configured to maintain packet manager application 74. Packet manager application 74 is configured to cooperate with packet manager application 67 in order to manage loss of packets in transmissions between server 58 and device 54. Packet manager application 74 is maintained within non-volatile storage 212. Processor 208 is configured to execute packet manager application 74. Device 54 also includes a battery 240 or other power supply. Battery 240 provides power to components within device 54.

Referring again to Figure 1, server 58 can be based on any well-known server environment including a module that houses one or more central processing units, volatile memory (e.g. random access memory), persistent memory (e.g. hard disk devices) and network interfaces to allow server 58 to communicate over relevant links. For example, server 58 can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 58 is contemplated. Those skilled in the art will now recognize that non-volatile storage and volatile storage are non-limiting examples of computer readable media that can store programming instructions executable on the processor of server 58.

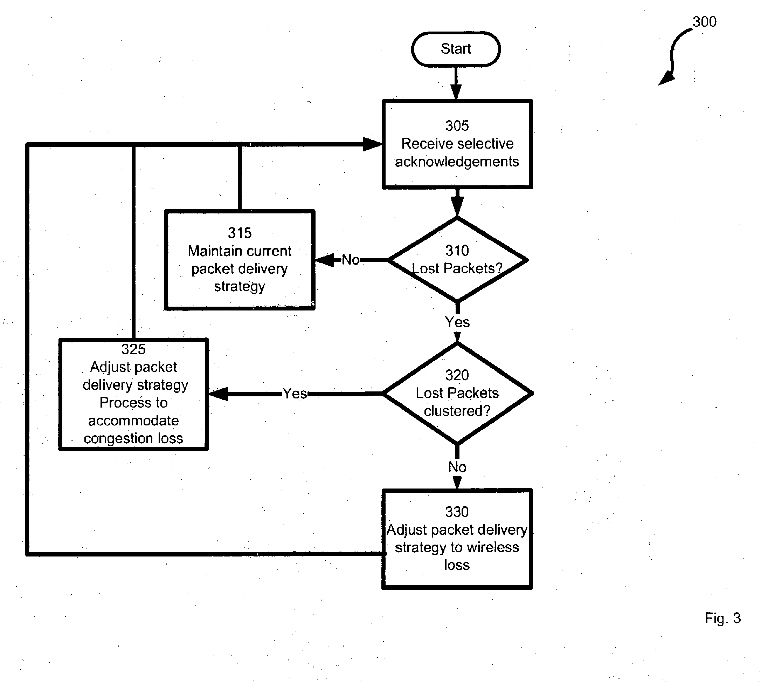

Referring now to Figure 3, a flowchart depicting a method for determining the cause of packet loss in data transmissions is indicated generally at 300. Method 300 can be implemented on system 50 or a suitable variation thereof.

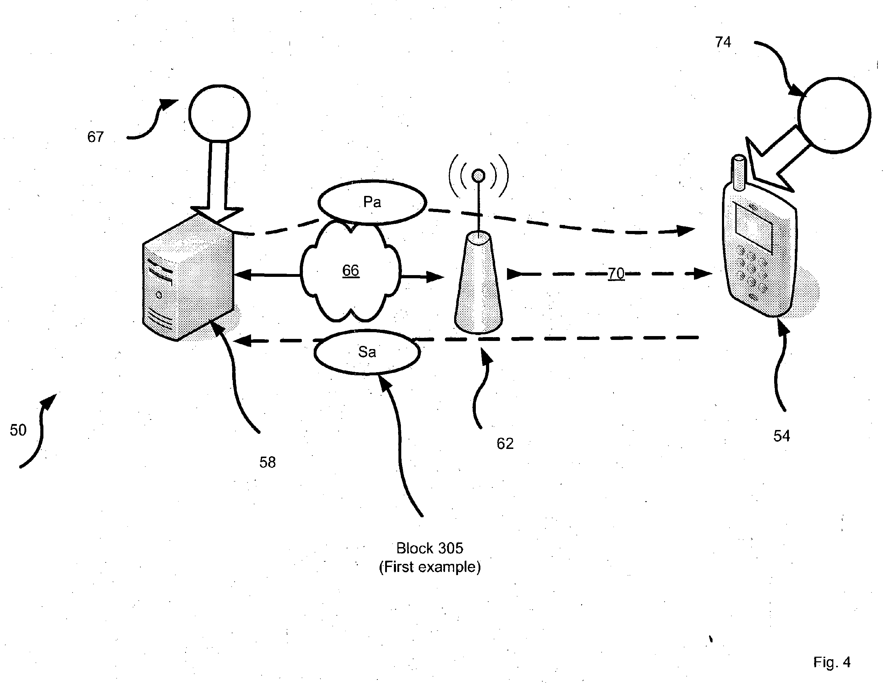

To assist in explaining method 300, certain assumptions will be made according to a specific example is shown in Figure 4, wherein server 58 is configured to send a plurality of packets Pa via wired link 66 and wireless link 70 to device 54. Such packets Pa are sent according to a defined delivery strategy that is configured to accommodate known or expected characteristics of link 66 and link 70 and to thereby obtain an optimum (for example, where circumstances permit, a maximum) bit rate for packets Pa. During an initial transmission of packets from server 58 to device 54, such characteristics may not be known and accordingly a default delivery strategy is employed. Such a default delivery strategy can employ, for example, selected transmission rates, error correction techniques like forward error correction (FEC). A delivery strategy can include increasing the data transmission rate every so often provided that no congestion is detected.

In a present embodiment packets Pa are sent via a transport protocol. The transport protocol that is chosen inherently includes the ability to adjust delivery via congestion control and utilizes packet loss as an indication of congestion. An example of a transport protocol is the Transport Control Protocol (TCP). Another example transport protocol is the Stream Control Transmission Protocol (SCTP).

Also in the example in Figure 4, device 54 is configured to send selective acknowledgements Sa that correspond to the reception of packets Pa at device 54. As an example, selective acknowledgements Sa can conform to the selective acknowledgments discussed in Mathis et al, Request for Comments: 2018, "RFC 2018 - TCP Selective Acknowledgement Options", October 1996). Thus, in this example, packet manager application 74 can be configured to send selective acknowledgements Sa utilizing functionality that is described in RFC 2018.

According to the example in Figure 4, it will be assumed that selective acknowledgements Sa indicate that ALL packets Pa were received at device 54.

Thus, continuing with the example in Figure 4, block 305 comprises receiving selective acknowledgements Sa at server 58. Block 310 comprises determining if any packets were lost based on the selective acknowledgements received at block 305. In the example discussed in relation to Figure 4, selective acknowledgements Sa indicated that ALL packets Pa were received, and therefore a "No" determination is reached at block 310. Block 315 comprises maintaining the current packet delivery strategy and then method 300 cycles back to block 305. Recall that where a current strategy includes periodically increasing the data transmission rate provided that no congestion is detected, then "maintaining" can comprise such periodic increasing.

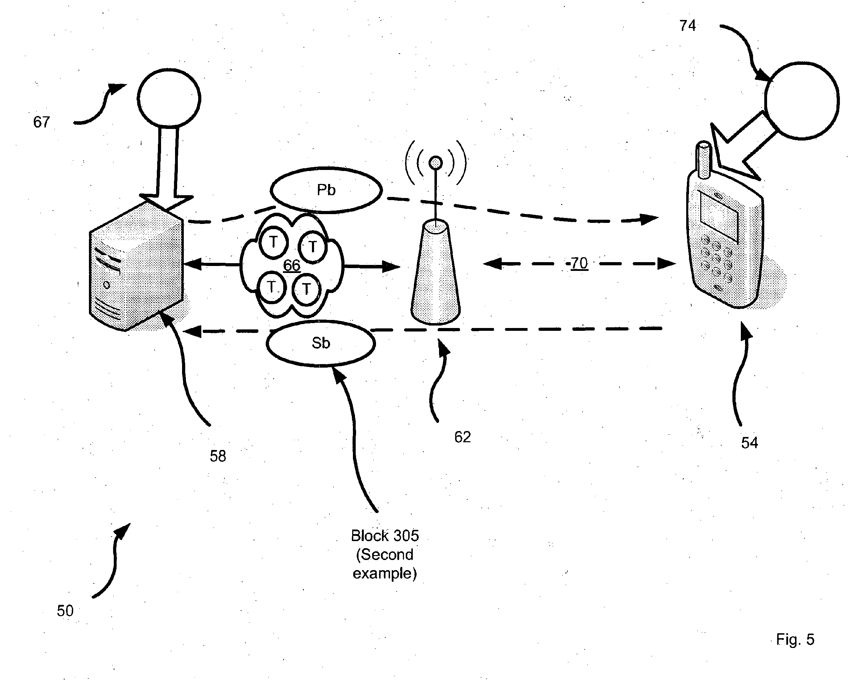

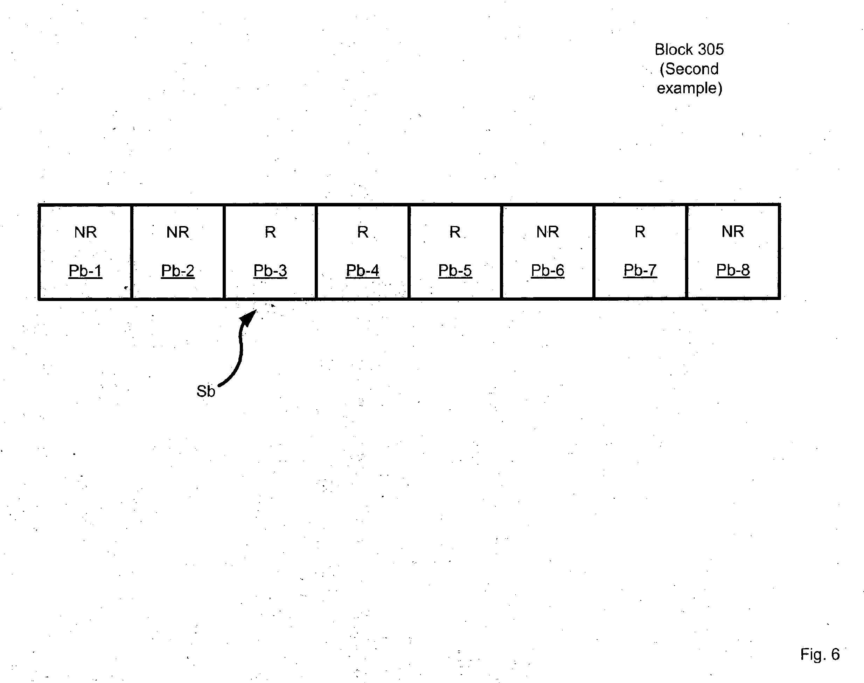

To further assist in explaining method 300, certain assumptions will be made according to another specific example shown in Figure 5, wherein, like Figure 4 server 58 is configured to send a plurality of packets Pb via wired link 66 and wireless link 70 to device 54. Like the example in Figure 4, packets Pb are sent according to a defined delivery strategy and packets Pb are sent via a transport protocol. Also like the example in Figure 4, in the example in Figure 5 device 54 is configured to send selective acknowledgements Sb that correspond to the reception of packets Pb at device 54. However in the example, link 66 is shown as also carrying a plurality of other traffic T, and thus, in the example in Figure 5, link 66 is congested. Thus, according to the example in Figure 5, it will be assumed that selective acknowledgements Sb indicate packet loss occurred at device 54. Figure 6 shows a representation of selective acknowledgements Sb, which indicate that; first packet Pb-1; second packet Pb-2; sixth packet Pb-6; and eighth packet Pb-8 of packets Pb were NOT received, while the remainder of the packets in packets Pb were received.

Thus, at block 310 in this second example, it is determined that "Yes", certain packets were lost. Block 320 comprises determining if the lost packets were clustered. Various criteria can be defined as to what characteristics of packet loss establish clustered packet loss and thereby reach a "yes" determination at block 320. In a present embodiment according to this example, the loss of at least a first predefined number ("X") of packets, out of a second predefined number ("Y") of consecutively-transmitted packets and within a predefined time span ("Z") will satisfy the established criteria. The predefined number X can be as low as two. The predefined number X can be greater. The predefined number Y is greater than X.

Referring again to Figure 6 in relation to block 320, it can be noted that first packet Pb-1 and second packet Pb-2 were not received and this satisfies the criteria of a loss of at least two packets, within a certain time span and a certain span of sequence, thereby leading to a "yes" determination at block 320.

(In a variation of the present embodiment, the loss of at least two clusters can be required to satisfy the criteria and reach a "Yes" determination at block 320. Thus, the example in Figure 6, this variation criteria would lead to a "No" determination at block 320 as only one cluster is lost according to selective acknowledgements Sb. In another variation embodiment, a cluster can also be deemed to occur if there are at least X1 lost packets out of Y1 consecutively-transmitted packets within a predefined time span Z1 OR if there's at least X2 lost packets out of Y2 consecutively-transmitted packets within time span Z2, where X2>=X1, Y2>=Y1, and Z2>=Z1.)

Assuming a "yes" determination is made at block 320, then at block 325 the packet strategy delivery is adjusted to accommodate for congestion loss. In this example, the congestion due to traffic T has been detected and the packet delivery strategy is adjusted to accommodate for this congestion. The selected congestion loss packet delivery strategy at block 325 is not particularly limited, but examples of such congestion loss packet delivery strategies will be discussed further below.

After block 325 method 300 cycles back to block 305.

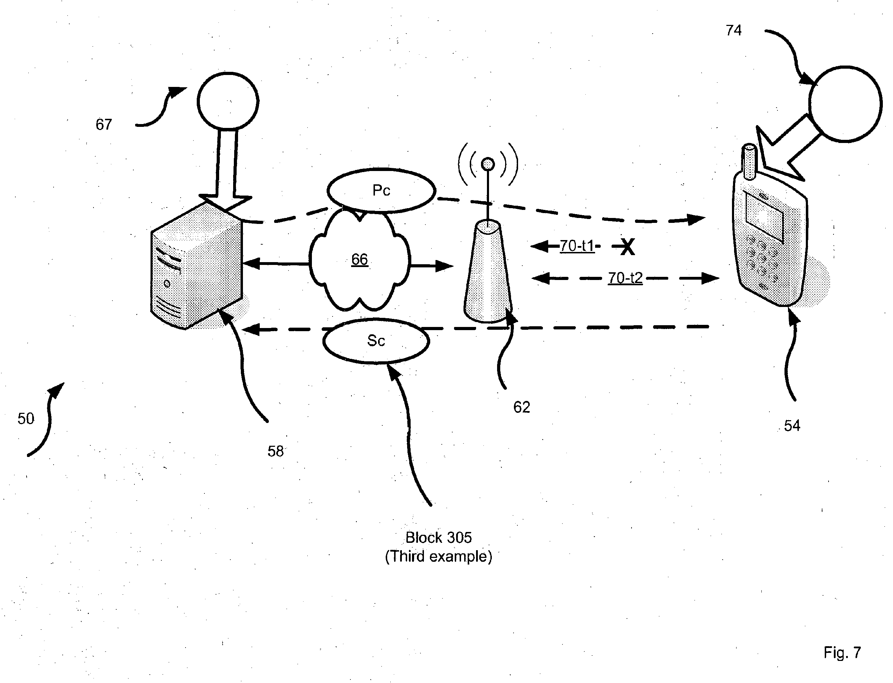

To further assist in explaining method 300, certain assumptions will be made according to third another specific example shown in Figure 7, wherein, like Figure 4 server 58 is configured to send a plurality of packets Pc via wired link 66 and wireless link 70 to device 54. Like the example in Figure 4, packets Pc are sent according to a defined delivery strategy and packets Pc are sent via a transport protocol. Also like the example in Figure 4, in the example in Figure 7 device 54 is configured to send selective acknowledgements Sc that correspond to the reception of packets Pc at device 54. However in the example, link 70 as occurring over two time periods corresponding to the transmission of packets Pc. At time period one, link 70-t1 has been interrupted such that link 70-t1 is broken and no complete link exists between base station 62 and device 54. Such breakage can occur for any variety of reasons, such as an object passing along the path between base station 62 and device 54, or interference from another adjacent radio link. However, at time period two link 70-t2 is intact and corresponds to the previously discussed functionality in relation to link 70.

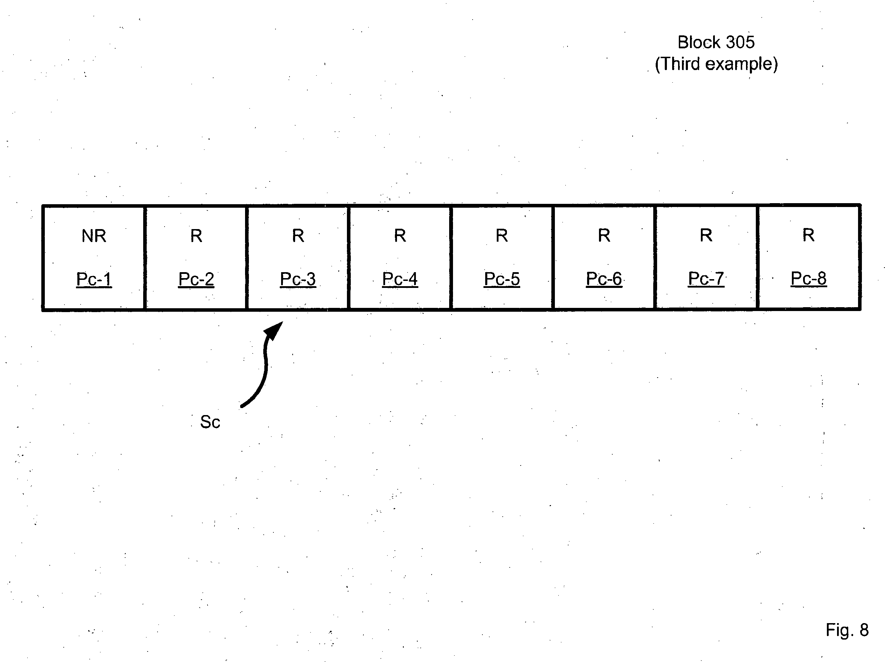

Thus, according to the example in Figure 8, it will be assumed that selective acknowledgements Sc indicate packet loss occurred at device 54. Figure 8 shows a representation of selective acknowledgements Sc, which indicate that; first packet Pc-1; was NOT received, while the remainder of the packets in packets Pc were received. Thus, according to selective acknowledgements Sc, only one packet has been lost.

Thus, at block 310 in this second example, it is determined that "Yes", certain packets were lost. Block 320 comprises determining if the lost packets were clustered. Based on the previously-discussed criteria example, the criteria will now be satisfied, leading to a "Yes" determination. Referring again to Figure 8 in relation to block 320, it can be noted that only packet Pc-1 was not received. Therefore, according to this example, the determination at block 320 is "no", because less than two packets were lost within the time span and a sequence of selective acknowledgements Sc

Since a "no" determination is made at block 320, then at block 330 the packet strategy delivery is adjusted to accommodate for wireless loss. In this example, the congestion due to the erratic behavior of link 70-t1 and link 70-t2 has been detected and the packet delivery strategy is adjusted to accommodate for these wireless losses. It will be understood that wireless loss is a type of loss due to residual errors or transmission errors in link 70. The selected wireless loss packet delivery strategy at block 325 is not particularly limited, but examples of such congestion loss packet delivery strategies will be discussed further below. After block 330 method 300 cycles back to block 305.

It should be understood that method 300 can be performed on portable computing device 54 based on selective acknowledgements received from server 58.

As indicated earlier, the strategies for block 325 and block 330 are not particularly limited. In a specific embodiment, the congestion loss delivery strategy for block 325 is configured to reduce the data transmission rate by a first factor, and the corresponding delivery wireless loss delivery strategy for block 330 is configured to reduce the data transmission rate by a second factor. The second factor can also be configured to be an amount that is less than the first factor, such that the data transmission rate for wireless congestion is still includes a reduction, but a reduction that is a lesser amount compared with congestion loss. The second factor can also be selected to be zero, such that in effect the wireless loss delivery strategy is to maintain the existing delivery strategy. The second factor can also be configured to vary according to the first factor, and the first factor dynamically varied over time in order to determine a transmission rate that achieves a predefined accepted loss.

In general, it should be understood that the teachings can be modified to be apply to any sending computer and receiving computer joined by a link or any shared medium over which, in addition to packet loss caused by congestion, there is a non-negligible number of packets lost is due to transmission errors.

Also, in general, it should be understood that wireless loss can be considered a specific case of transmission error loss, whereby packets are discarded due to errors introduced during the data transmission, for example due to thermal noise or interference. The wireless medium is an example of a medium where transmission error loss can occur. In the case when error control procedures are used (for example forward error correction (FEC) or Automatic Retransmission Request (ARQ)), any residual errors not detected and corrected by the error control procedure can contribute to transmission errors.

Combinations, subsets and variations of the foregoing are also contemplated. The claims attached hereto define the scope of the monopoly sought.

## Claims

1. A method for improving packet throughput comprising:
receiving, at a sending computer, selective acknowledgements from a recipient computer that is connected to said sending computer by a link that is shared with at least one additional computer; said selective acknowledgements responsive to packets sent from said sending computer to said recipient computer according to a delivery strategy including a data transmission rate;
determining from said selective acknowledgements whether any of said packets were lost;
if said selective acknowledgements indicate none of said packets were lost, maintaining said delivery strategy;
if said selective acknowledgements indicate packets were lost, determining if any of said lost packets were clustered by determining whether at least a predefined portion of said packets were lost within a predefined time period;
if said lost packets were clustered, adjusting said delivery strategy by reducing said data transmission rate by a first factor to accommodate a first type of packet loss due to congestion on said link;
if said lost packets were not clustered, adjusting said delivery strategy by reducing said data transmission rate by a second factor to accommodate a second type of packet loss due to transmission errors;
said second factor being smaller than said first factor.

2. The method of claim 1 wherein at least a portion of said link is wireless and said transmission errors occur over said wireless portion.

3. The method of claim 1 or claim 2 wherein at least a portion of said link is **characterized by** a non-negligible chance of packet loss due to transmission error.

4. The method of any one of claims 1 to 3 wherein said predefined portion is defined as a first predefined number of packets out of a second predefined number of consecutively transmitted packets.

5. A computer comprising a memory for storing programming instructions and a processor configured to execute said programming instructions for causing said computer to implement the steps of the method in accordance with any one of claims 1 to 4.

6. The computer of claim 5 wherein the computer is a portable electronic device.

7. The computer of claim 5 wherein the computer is a server.

8. A system comprising: a computer in accordance with claim 5, said computer comprising a sending computer; and a recipient computer for receiving packets from said sending computer over a link connecting said sending computer to said receiving computer.

9. A computer readable storage medium containing programming instructions executable on a processor of a sending computer; said programming instructions causing said sending computer to implement the steps of the method according to any one of claims 1 to 4.

## Patentansprüche

1. Verfahren zum Verbessern eines Paketdurchsatzes, das aufweist:
Empfangen, an einem sendenden Computer, selektiver Bestätigungen von einem Empfänger-Computer, der mit dem sendenden Computer über eine Verbindung verbunden ist, die mit zumindest einem weiteren Computer gemeinsam genutzt wird; wobei die selektiven Bestätigungen in Reaktion auf Pakete sind, die von dem sendenden Computer an den Empfänger-Computer gemäß einer Lieferstrategie gesendet werden, einschließlich einer Datenübertragungsrate;
Bestimmen aus den selektiven Bestätigungen, ob irgendwelche der Pakete verloren wurden;
wenn die selektiven Bestätigungen angeben, dass keines der Pakete verloren wurde, Beibehalten der Lieferstrategie;
wenn die selektiven Bestätigungen angeben, dass Pakete verloren wurden, Bestimmen, ob irgendwelche der verlorenen Pakete gruppiert wurden,
durch Bestimmen, ob zumindest ein vordefinierter Teil der Pakete in einer vordefinierten Zeitdauer verloren wurde;
wenn die verlorenen Pakete gruppiert wurden, Anpassen der Lieferstrategie durch Reduzieren der Datenübertragungsrate um einen ersten Faktor, um einen ersten Typ eines Paketverlusts aufgrund einer Überlastung auf der Verbindung zu berücksichtigen;
wenn die verlorenen Pakete nicht gruppiert wurden, Anpassen der Lieferstrategie durch Reduzieren der Datenübertragungsrate um einen zweiten Faktor, um einen zweiten Typ eines Paketverlusts aufgrund von Übertragungsfehlern zu berücksichtigen;
wobei der zweite Faktor kleiner ist als der erste Faktor.

2. Das Verfahren gemäß Anspruch 1, wobei zumindest ein Teil der Verbindung drahtlos ist und die Übertragungsfehler über den drahtlosen Teil auftreten.

3. Das Verfahren gemäß Anspruch 1 oder Anspruch 2, wobei zumindest ein Teil der Verbindung durch eine nicht zu vernachlässigende Wahrscheinlichkeit eines Paketverlusts aufgrund eines Übertragungsfehlers gekennzeichnet ist.

4. Das Verfahren gemäß einem der Ansprüche 1 bis 3, wobei der vordefinierte Teil als eine erste vordefinierte Anzahl von Paketen aus einer zweiten vordefinierten Anzahl von aufeinanderfolgend übertragenen Paketen ist.

5. Ein Computer mit einem Speicher zum Speichern von Programmieranweisungen und einem Prozessor, der konfiguriert ist zum Ausführen der Programmieranweisungen, um den Computer zu veranlassen, die Schritte des Verfahrens gemäß einem der Ansprüche 1 bis 4 zu implementieren.

6. Der Computer gemäß Anspruch 5, wobei der Computer eine tragbare elektronische Vorrichtung ist.

7. Der Computer gemäß Anspruch 5, wobei der Computer ein Server ist.

8. Ein System, das aufweist: einen Computer gemäß Anspruch 5, wobei der Computer einen sendenden Computer aufweist; und einen Empfänger-Computer zum Empfangen von Paketen von dem sendenden Computer über eine Verbindung, die den sendenden Computer mit dem Empfänger-Computer verbindet.

9. Computerlesbares Speichermedium, das Programmieranweisungen umfasst, die auf einem Prozessor eines sendenden Computers ausführbar sind, wobei die Programmieranweisungen den sendenden Computer veranlassen, die Schritte des Verfahrens gemäß einem der Ansprüche 1 bis 4 zu implementieren.

## Revendications

1. Procédé pour améliorer le débit de paquets comprenant :
la réception, au niveau d'un ordinateur émetteur, d'accusés de réception sélectifs en provenance d'un ordinateur destinataire qui est connecté audit ordinateur émetteur par une liaison qui est partagée avec au moins un ordinateur additionnel ; lesdits accusés de réception sélectifs sensibles à des paquets envoyés dudit ordinateur émetteur audit ordinateur destinataire selon une stratégie de remise incluant un taux de transmission de données ;
la détermination à partir desdits accusés de réception sélectifs de si des paquets quelconques desdits paquets ont été perdus ;
si lesdits accusés de réception sélectifs indiquent qu'aucun desdits paquets n'a été perdu, maintenir ladite stratégie de remise ;
si lesdits accusés de réception sélectifs indiquent que des paquets ont été perdus, déterminer si des paquets quelconques desdits paquets perdus ont été mis en grappe en déterminant si au moins une partie prédéfinie desdits paquets a été perdue dans une période de temps prédéfinie ;
si lesdits paquets perdus ont été mis en grappe, ajuster ladite stratégie de remise en réduisant ledit taux de transmission de données par un premier facteur pour prendre en charge un premier type de perte de paquets dû à l'encombrement sur ladite liaison ;
si lesdits paquets perdus n'ont pas été mis en grappe, ajuster ladite stratégie de remise en réduisant ledit taux de transmission de données par un second facteur pour prendre en charge un second type de perte de paquets dû à des erreurs de transmission ;
ledit second facteur étant plus petit que ledit premier facteur.

2. Procédé selon la revendication 1, dans lequel au moins une partie de ladite liaison est sans fil et lesdites erreurs de transmission se produisent sur ladite partie sans fil.

3. Procédé selon la revendication 1 ou la revendication 2, dans lequel au moins une partie de ladite liaison est **caractérisée par** une probabilité non négligeable de perte de paquets due à une erreur de transmission.

4. Procédé selon l'une quelconque des revendications 1 à 3, dans lequel ladite partie prédéfinie est définie comme un premier nombre prédéfini de paquets sur un second nombre prédéfini de paquets transmis consécutivement.

5. Ordinateur comprenant une mémoire pour stocker des instructions de programmation et un processeur configuré pour exécuter lesdites instructions de programmation pour amener ledit ordinateur à mettre en oeuvre les étapes du procédé conformément à l'une quelconque des revendications 1 à 4.

6. Ordinateur selon la revendication 5, dans lequel l'ordinateur est un dispositif électronique portable.

7. Ordinateur selon la revendication 5, dans lequel l'ordinateur est un serveur.

8. Système comprenant : un ordinateur conformément à la revendication 5, ledit ordinateur comprenant un ordinateur émetteur, et un ordinateur destinataire pour recevoir des paquets en provenance dudit ordinateur émetteur sur une liaison connectant ledit ordinateur émetteur audit ordinateur récepteur.

9. Support de stockage lisible par ordinateur contenant des instructions de programmation exécutables sur un processeur d'un ordinateur émetteur ; lesdites instructions de programmation amenant ledit ordinateur émetteur à mettre en oeuvre les étapes du procédé selon l'une quelconque des revendications 1 à 4.
